# EUROPÄISCHE PATENTANMELDUNG

(11) **EP 4 671 014 A1**
(43) Veröffentlichungstag der Anmeldung: **31.12.2025**
(21) Anmeldenummer: 25184661.4
(22) Anmeldetag: 23.06.2025
(51) Int. Cl.: B60J 7/16

(54) **HUBDACHSYSTEM FÜR FAHRZEUGE**

(30) Priorität: 24.06.2024 DE 102024117771
(71) Anmelder: Doglan, Mevlüt, 31139 Hildesheim (DE); Dogan, Sinan, 31139 Hildesheim (DE)
(72) Erfinder: Doglan, Mevlüt, 31139 Hildesheim (DE); Dogan, Sinan, 31139 Hildesheim (DE)
(74) Vertreter: Sandvoß, Stefanie

(57) **Zusammenfassung**

Hubdachsystem für Fahrzeuge, umfassend eine Antriebseinrichtung (1), die eingerichtet ist, eine erste Gewindestange (2) und eine parallel zu dieser angeordnete zweite Gewindestange (3) um ihre Längsachsen rotieren zu lassen, wobei die erste Gewindestange (2) mit einer dritten Gewindestange (4) verbunden ist, die ein zu der ersten Gewindestange gegenläufiges Gewinde aufweist, und wobei die zweite Gewindestange (2) mit einer vierten Gewindestange (5) verbunden ist, die ein zu der zweiten Gewindestange (3) gegenläufiges Gewinde aufweist, wobei auf jeder der Gewindestangen (2, 3, 4, 5) jeweils ein Gleitmodul (6) verschieblich angeordnet ist, wobei die Gleitmodulen sich beim Rotieren der Gewindestangen in eine erste Richtung aufeinander zu und sich beim Rotieren der Gewindestangen in entgegengesetzter Richtung voneinander weg bewegen, wobei die Gewindestangen (2, 3, 4, 5) und Gleitmodule (6) Bestandteile einer Rahmenkonstruktion (7) sind, wobei die Rahmenkonstruktion über an den Gleitmodulen angeordnete Verbindungselemente (8) mit einer Unterkonstruktion (9) verbunden ist und wobei die Rahmenkonstruktion (7) eingerichtet ist, sich beim Rotieren der Gewindestangen (2, 3, 4, 5) in Richtung der Unterkonstruktion (9) oder in Richtung von der Unterkonstruktion (9) weg zu bewegen.

## Beschreibung

Die vorliegende Erfindung betrifft ein neuartiges Hubdachsystem zur Befestigung an einem Fahrzeug, beispielsweise einem Camper, Wohnmobil, Pick-up, Sprinter oder Bus.

Camping wird von vielen Leuten als naturnahe und ideale Art zur Verbringung ihres Urlaubs empfunden. Je nach den persönlichen Bedürfnissen, Vorlieben und Möglichkeiten findet die Übernachtung beim Camping üblicherweise in einem bloßen Zelt, im Wohnwagen oder auch im Wohnmobil statt. Neben den im Vergleich zu Hotelurlauben deutlich geringeren Kosten bietet Camping dabei den zusätzlichen Vorteil, dass man ortsunabhängig ist und den Standort nach Belieben wechseln kann. Allerdings sind die einmaligen Anschaffungskosten für einen Wohnwagen oder ein Wohnmobil vergleichsweise hoch und auch die Miete eines Wohnwagens oder Wohnmobils kann sehr teuer werden, sodass vielen Campern nur die Möglichkeit bleibt, in einem Zelt zu übernachten.

Das Aufschlagen bzw. Errichten eines Zeltes ist sowohl auf einem natürlichen Untergrund möglich und in dieser Form am weitesten verbreitet, als auch auf den Dächern von Fahrzeugen in Form sog. Dachzelte, die über eine Leiter zugänglich sind.

Nachteilhaft an diesen Zelten ist, dass sie keinen festen Boden bieten und die Camper in den Zelten üblicherweise auf Isomatten oder Luftmatratzen schlafen. Insbesondere für ältere Menschen oder Menschen mit Rückenproblemen ist dies jedoch oftmals sehr unangenehm, da diese idealerweise auf härteren Matratzen ohne bloße Luftpolsterung schlafen.

Aus dem Stand der Technik sind darüber hinaus Lösungen bekannt, die die Errichtung einer Hubdach-Kabine auf einem Fahrzeug vorsehen. Ein solches Hubdach wird im Stand der Technik pneumatisch und/oder über ein Scherensystem nach oben gefahren und erlaubt es Campern, darunter auf einer fest in der Kabine installierten Matratze zu übernachten. Der Zwischenraum zwischen dem Boden und dem Dach der Kabine wird seitlich in der Regel durch Klappen begrenzt, die entweder am Hubdach befestigt sind und nach dem Ausfahren des Hubdachs in seine maximale Höhe nach unten geklappt werden oder die am Boden der Kabine befestigt sind und nach dem Ausfahren des Hubdachs in seine maximale Höhe nach oben geklappt werden. Eine gattungsgemäße Kabine mit Parallel-Hubdach wird im Internet vorgestellt unter https://www.youtube.com/watch?v=0EYfdMQq8q8. Diese Lösung bietet zwar den Komfort einer richtigen Matratze, ist jedoch hinsichtlich des Aufbaus der Kabine und auch deren Stabilität verbesserungswürdig. Weiterhin ist nachteilhaft, dass das Scherensystem bei ausgefahrenem Hubdach frei zugänglich und die Mechanik damit der Witterung ausgesetzt ist. So ist das System ungeschützt gegen Staub, Regen, Schnee und Eis.

Die DE 10 2022 121 084 A1 beschreibt eine Anordnung mit zumindest einem Rahmenelement, das für ein Hubdach eines Wohnmobils, Wohnwagens oder ähnlichen Freizeitfahrzeugs dient, wobei im montierten Zustand zumindest ein Seitenwandteil des Hubdachs an dem Rahmenelement befestigt ist. Das Rahmenelement bildet dabei einen Luftkanal, durch den Luft in das Hubdach führbar ist.

Die DE 10 2021 104 861 A1 beschreibt ein Freizeitfahrzeug, insbesondere ein Wohnmobil, das über einem Fahrersitzplatz einen Alkoven insbesondere als Schlafbereich aufweist, wobei der darüber liegende Dachbereich zur Raumerweiterung anhebbar ist und der Dachbereich in seiner vollständig angehobenen Stellung um einen Winkel um eine Fahrzeugquerachse gegenüber seiner abgesenkten Stellung gedreht ist.

Die DE 93 92 838 U1 beschreibt ein Kombinationskraftfahrzeug mit einem Hubdach, das erst hinter einem fest am Fahrzeugchassis angeordneten kurzen Dachvorderteil beginnt und eine zumindest annähernd vertikale vordere Stirnfläche aufweist, die einer parallel dazu verlaufenden hinteren Stirnfläche des Dachvorderteils mit geringem Abstand gegenüberliegt.

### Aufgabe der Erfindung

Es ist die Aufgabe der vorliegenden Erfindung, ein alternatives Hubdachsystem zur Befestigung an einem Fahrzeug bereitzustellen, das die vorgenannten aus dem Stand der Technik bekannten Nachteile überwindet und sich vorzugsweise durch eine hohe Stabilität, eine einfache Bedienbarkeit und erhöhte Witterungsbeständigkeit bei ausgefahrenem Hubdach auszeichnet.

### Allgemeine Beschreibung der Erfindung

Die Erfindung löst diese Aufgabe mit den Merkmalen der Ansprüche und insbesondere mit einem Hubdachsystem für Fahrzeuge, umfassend eine Antriebseinrichtung, die eingerichtet ist, eine erste Gewindestange und eine parallel zu dieser angeordnete zweite Gewindestange, die ein zu dem Gewinde der ersten Gewindestange gleichgerichtetes bzw. gleichläufiges Gewinde aufweist, um ihre Längsachsen rotieren zu lassen, wobei die erste Gewindestange direkt oder über ein Zwischenelement mit einer dritten Gewindestange verbunden ist, die ein zu der ersten Gewindestange gegenläufiges Gewinde aufweist, und wobei die zweite Gewindestange direkt oder über ein Zwischenelement mit einer vierten Gewindestange verbunden ist, die ein zu der zweiten Gewindestange gegenläufiges Gewinde aufweist, wobei auf jeder der Gewindestangen jeweils ein Gleitmodul verschieblich angeordnet ist, wobei das auf der ersten Gewindestange angeordnete erste Gleitmodul und das auf der dritten Gewindestange angeordnete dritte Gleitmodul eingerichtet sind, sich beim Rotieren der Gewindestangen in eine erste Richtung synchron aufeinander zu zu bewegen und sich beim Rotieren der Gewindestangen in entgegengesetzter Richtung synchron voneinander weg zu bewegen, und wobei das auf der zweiten Gewindestange angeordnete zweite Gleitmodul und das auf der vierten Gewindestange angeordnete vierte Gleitmodul eingerichtet sind, sich beim Rotieren der Gewindestangen in eine erste Richtung synchron aufeinander zu zu bewegen und sich beim Rotieren der Gewindestangen in entgegengesetzter Richtung synchron voneinander weg zu bewegen. Die Gewindestangen und die auf diesen angeordneten Gleitmodule sind dabei Bestandteile einer Rahmenkonstruktion, die mittels an den Gleitmodulen angeordneter Verbindungselemente mit einer Unterkonstruktion verbunden und eingerichtet ist, sich beim Rotieren der Gewindestangen in eine erste Richtung in Richtung der Unterkonstruktion zu bewegen und sich beim Rotieren der Gewindestangen in entgegengesetzte Richtung von der Unterkonstruktion weg zu bewegen.

Die Antriebseinrichtung kann eine von einem Elektromotor und/oder mechanisch angetriebene Antriebseinrichtung sein, die beispielsweise ein oder mehrere Kegelgetriebe (z.B. Kreuzgetriebe und/oder Winkelgetriebe) aufweist. Insbesondere weist die Antriebseinrichtung gemäß einer Ausführungsform ein Kreuzgetriebe auf, das eingerichtet ist, eine Kraft mittels einer ersten Welle und einem ersten Winkelgetriebe auf die erste Gewindestange sowie mittels einer zweiten Welle und einem zweiten Winkelgetriebe auf die zweite Gewindestange zu übertragen. Alternativ kann die Antriebseinrichtung auch Kettensysteme (Ketten und Kettenräder), Riemensysteme (Riemen und Rollen) und/oder Seilsysteme (Seile und Rollen) umfassen, um eine Kraft auf die erste und die zweite Gewindestange zu übertragen.

In noch einer alternativen Ausführungsform kann die Antriebseinrichtung des erfindungsgemäßen Hubdachsystems auch zwei separate Motoren umfassen, von denen ein Motor eingerichtet ist, die erste Gewindestange anzutreiben, und der andere Motor eingerichtet ist, die zweite Gewindestange anzutreiben. Hierbei ist jedoch besonders darauf zu achten, dass die Kraft in Form einer Drehbewegung synchron auf die erste und die zweite Gewindestange übertragen wird.

Vorzugsweise weisen die erste und die zweite Gewindestange ein gleichgerichtetes/gleichläufiges Gewinde auf, d.h. beide Gewindestangen weisen entweder ein Rechtsgewinde oder ein Linksgewinde auf. Bei einer Drehung beider Gewindestangen in dieselbe Richtung verschieben sich daher auch die beiden auf diesen Gewindestangen angeordneten Gleitmodule in die gleiche Richtung.

Für die Zwecke der vorliegenden Erfindung wird unter einem Gleitmodul ein beliebiges Bauteil mit Innengewinde verstanden, insbesondere eine Mutter.

Erfindungsgemäß ist die erste Gewindestange mit einer dritten Gewindestange verbunden und die zweite Gewindestange ist mit einer vierten Gewindestange verbunden, wobei die erste und die dritte Gewindestange ein gegenläufiges Gewinde aufweisen und auch die zweite und die vierte Gewindestange ein gegenläufiges Gewinde aufweisen. Beispielsweise haben also die erste und die zweite Gewindestange ein Rechtsgewinde, während die dritte und die vierte Gewindestange ein Linksgewinde aufweisen, oder umgekehrt. Die erste und die dritte Gewindestange sowie auch die zweite und die vierte Gewindestange sind erfindungsgemäß entweder direkt miteinander verbunden, z.B. miteinander verschweißt, oder über ein Zwischenelement miteinander verbunden, wobei das Zwischenelement beispielsweise ein Rundprofil, insbesondere ein Rohrstück, sein kann. Unabhängig davon, ob die erste und die dritte sowie die zweite und die vierte Gewindestange direkt oder über ein Zwischenelement miteinander verbunden sind, ist die Anordnung der Gewindestangen jeweils so, dass die erste und die dritte Gewindestange mit ihren Längsmittelachsen auf einer gemeinsamen Gerade liegen und die zweite und die vierte Gewindestange mit ihren Längsmittelachsen ebenfalls auf einer gemeinsamen Gerade liegen, die zu der Gerade, auf der die Längsmittelachsen der ersten und der dritten Gewindestange liegen, parallel ist.

Ein Vorteil der Verbindung der ersten mit der dritten Gewindestange sowie der zweiten mit der vierten Gewindestange über ein Zwischenelement, z.B. ein Rohr, das über beidseitige Kupplungen mit den Gewindestangen verbunden ist, liegt darin, dass dieses in der Regel preislich günstiger ist als für eine direkte Verbindung die Gewindestangen länger zu gestalten und miteinander zu verschweißen, da Gewindestangen als Vollprofil teurer sind. Darüber hinaus sind diese auch schwerer, was ebenfalls ein Argument für das Vorsehen jeweils eines Zwischenelementes zwischen der ersten und der dritten Gewindestange sowie zwischen der zweiten und der vierten Gewindestange ist.

Dadurch, dass die erste und die dritte Gewindestange in dem erfindungsgemäßen Hubdachsystem ein gegenläufiges Gewinde aufweisen, sich jedoch aufgrund ihrer Verbindung miteinander beim Drehen um ihre Längsmittelachse in die gleiche Richtung drehen, verschieben sich die Gleitmodule, die auf diesen Gewindestangen angeordnet sind, synchron in entgegengesetzte Richtungen, d.h. beim Rotieren der Gewindestangen in eine erste Richtung um ihre Längsmittelachsen bewegen sich die auf den Gewindestangen verschieblich angeordneten Gleitmodule synchron aufeinander zu, während sie sich beim Rotieren der Gewindestangen in eine entgegengesetzte zweite Richtung um ihre Längsmittelachsen synchron voneinander weg bewegen. Analog verhält es sich mit den auf der zweiten und der vierten Gewindestange angeordneten Gleitmodulen, die sich aufgrund der gegenläufigen Gewinde beider Gewindestangen, auf denen sie angeordnet sind, ebenfalls beim Rotieren der Gewindestangen in eine erste Richtung um ihre Längsmittelachsen synchron aufeinander zu bewegen, und sich beim Rotieren der Gewindestangen in eine entgegengesetzte zweite Richtung um ihre Längsmittelachsen synchron voneinander weg bewegen.

Da jedes Gleitmodul erfindungsgemäß über jeweils ein Verbindungselement mit einer zu dem erfindungsgemäßen Hubdachsystem gehörenden Unterkonstruktion verbunden ist, verändert sich bei jeder Bewegung der Gleitmodule auf den Gewindestangen auch der Abstand der Unterkonstruktion zu einer Rahmenkonstruktion, die die Gleitmodule umfasst. Außer den Gleitmodulen gehören auch die Gewindestangen und optional vorhandene Zwischenelemente sowie vorzugsweise auch die bevorzugt vorhandenen Wellen, das Kreuzgetriebe und die Winkelgetriebe zu der Rahmenkonstruktion. Letztere wird so genannt, da die vorgenannten Bestandteile gemäß einer Ausführungsform des erfindungsgemäßen Hubdachsystems den Raum, den dieses umgeben soll, an drei Seiten einrahmen, wobei auch ein zusätzliches Rahmenelement, das die Enden der zweiten und der vierten Gewindestange verbindet und die vierte Seite des Rahmens bildet, zu der Rahmenkonstruktion gehören kann. Generell ist die Rahmenkonstruktion jedoch als flächiges Gebilde zu verstehen, die zumindest die Gewindestangen, optionale Zwischenelemente und die auf den Gewindestangen angeordneten Gleitmodule umfasst, vorzugsweise in Form einer Platte, in die die Gewindestangen, die Gleitmodule und optional weitere Bauteile integriert sind.

Vorzugsweise sind die an den Gleitmodulen angeordneten Verbindungselemente zwischen der Rahmenkonstruktion und der Unterkonstruktion eingerichtet, stufenlos in einem beliebigen Winkel zwischen 0° und 90° zu der Unterkonstruktion angeordnet zu werden. Dabei sind die Verbindungselemente insbesondere mit einem ersten Ende an der Unterkonstruktion angeordnet und z.B. gelenkig mit dieser verbunden. Das dem ersten Ende gegenüberliegende zweite Ende der Verbindungselemente ist mit einem der auf einer der Gewindestangen angeordneten Gleitmodule verbunden.

Die Gleitmodule können jeweils über die gesamte Länge der Gewindestange bewegt werden, oder alternativ können auch Anschläge an den Gewindestangen vorgesehen sein, um den Bewegungsspielraum der Gleitmodule entlang der Längsachsen der Gewindestangen zu begrenzen. In einer Position, in der die auf der ersten und der dritten Gewindestange angeordneten Gleitmodule sowie auch die auf der zweiten und vierten Gewindestange angeordneten Gleitmodule den geringstmöglichen Abstand zueinander haben, kontaktiert die Rahmenkonstruktion die Unterkonstruktion, d.h. die Verbindungselemente haben einen 0°-Winkel zu der Unterkonstruktion. Diese Position des Hubdachsystems wird auch als "eingefahrene Position" bezeichnet. In einer Position, in der die auf der ersten und der dritten Gewindestange angeordneten Gleitmodule sowie auch die auf der zweiten und vierten Gewindestange angeordneten Gleitmodule den größtmöglichen Abstand zueinander haben, ist die Rahmenkonstruktion so weit wie möglich von der Unterkonstruktion beabstandet, d.h. die Verbindungselemente haben einen 90°-Winkel zu der Unterkonstruktion sowie auch zu der Rahmenkonstruktion. Diese Position des Hubdachsystems wird auch als "ausgefahrene Position" bezeichnet. Es ist leicht ersichtlich, dass die Distanz, die jedes Gleitmodul auf seiner zugehörigen Gewindestange zwischen deren einem Gewindeende oder Anschlagpunkt zu ihrem gegenüberliegenden Gewindeende oder Anschlagpunkt zurücklegen kann, dem Abstand entspricht, um den die Rahmenkonstruktion von der Unterkonstruktion entfernt werden kann, was wiederum der Höhe der Kabine des Hubdachsystems entspricht.

Gemäß einer Ausführungsform weisen die vier Gewindestangen jeweils eine Länge zwischen 50 und 100 cm auf, z.B. zwischen 70 und 80 cm, wobei auch eine größere Länge problemlos realisierbar wäre und zu einer größeren Höhe der Kabine sowie zu einer größeren Länge des Hubdachsystems führen würde.

Vorzugsweise weist das erfindungsgemäße Hubdachsystem auch ein erstes Wandelement und ein gegenüberliegendes zweites Wandelement auf, die jeweils mit einer Längsseite an der Unterkonstruktion angeordnet sind, wobei das erste Wandelement mit seiner gegenüberliegenden Längsseite an dem auf der dritten Gewindestange verschieblich angeordneten Gleitmodul und dem auf der vierten Gewindestange verschieblich angeordneten Gleitmodul befestigt ist und wobei das zweite Wandelement mit seiner gegenüberliegenden Längsseite an dem auf der ersten Gewindestange verschieblich angeordneten Gleitmodul und dem auf der zweiten Gewindestange verschieblich angeordneten Gleitmodul befestigt ist. Das erste Wandelement bildet somit die Vorderwand der Kabine und das zweite Wandelement bildet die Rückwand der Kabine. Beide Wandelemente werden aufgrund der beschriebenen Anordnung an den Gleitmodulen von einer ersten Position, in der sie an der Unterkonstruktion anliegen, beim Ausfahren des Hubdachsystems in eine Position bewegt, in der sie schließlich in einem 90°-Winkel sowohl zu der Unterkonstruktion als auch zu der Rahmenkonstruktion angeordnet sind.

Vorzugsweise weist das erfindungsgemäße Hubdachsystem weiterhin auch ein drittes Wandelement und ein gegenüberliegendes viertes Wandelement auf, die jeweils unabhängig voneinander mit einer Längsseite an der Unterkonstruktion angeordnet sind, wobei sie in einem ausgefahrenen Zustand, in dem die Unterkonstruktion und die Rahmenkonstruktion jeweils in einem 90°-Winkel zu dem ersten Wandelement und dem zweiten Wandelement angeordnet sind, mit der gegenüberliegenden Längsseite an der Rahmenkonstruktion anliegen. Auf diese Weise begrenzen die Rahmenkonstruktion, die Unterkonstruktion und die vier Wandelemente im ausgefahrenen Zustand des Hubdachsystems zwischen sich eine Kabine. In dieser Kabine kann eine Matratze auf dem Boden, d.h. der Unterkonstruktion, angeordnet bzw. in diese integriert sein, die auch im zusammengefahrenen Zustand von oben durch die Rahmenkonstruktion geschützt ist. Im zusammengefahrenen Zustand liegen das dritte und das vierte Wandelement vorzugsweise auf der Matratze auf.

Optional kann jedes der vier Wandelemente unabhängig von den übrigen Wandelementen ein Fenster und/oder eine Tür bzw. einen Zugang aufweisen.

Weiter optional kann jedes der vier Wandelemente unabhängig von den übrigen Wandelementen mit einem benachbarten Wandelement und/oder der Rahmenkonstruktion verriegelt und dadurch in seiner Position fixiert werden.

Gemäß einer Ausführungsform sind die vier Wandelemente des erfindungsgemäßen Hubdachsystems jeweils aus einem faltbaren Material gefertigt, beispielsweise aus einem Gewebe, Stoff oder Zeltmaterial.

Alternativ können die vier Wandelemente jeweils aus einem festen Material gefertigt sein, wobei jedes der vier Wandelemente unabhängig von den anderen drei Wandelementen mit einer Längsseite entweder an der Unterkonstruktion oder an der Rahmenkonstruktion angeordnet ist, insbesondere über eine gelenkige Verbindung. Nach dem Ausfahren des Hubdachsystems, währenddessen vorzugsweise auch das erste und das zweite Wandelement ausgefahren werden, können anschließend das zwischen dem ersten und zweiten Wandelement angeordnete dritte und vierte Wandelement entlang der Längsseite, mit der diese an der Unterkonstruktion angeordnet sind, um 90° nach oben geklappt werden, sodass sie zusammen mit dem ersten und dem zweiten Wandelement sowie der Unterkonstruktion und der Rahmenkonstruktion einen Raum zwischen sich begrenzen, der als Kabine dienen kann und in dem vorzugsweise eine Matratze in die Unterkonstruktion integriert oder auf dieser angeordnet ist.

Es ist ein besonderer Vorteil der vorliegenden Erfindung, dass sich in diesem Zustand, in dem die Rahmenkonstruktion, die Unterkonstruktion und die vier Wandelemente zwischen sich eine Kabine begrenzen, keine Bestandteile des Hubdachsystems außerhalb der Kabine befinden. Insbesondere sind die Gewindestangen und die auf diesen verschieblich angeordneten Gleitmodule in die Rahmenkonstruktion integriert und somit bei ausgefahrenem Hubdachsystem nicht außerhalb der Kabine angeordnet bzw. auch beim eingefahrenen Hubdachsystem nicht von außen zugänglich. Daher sind diese Bestandteile zuverlässig vor Staub, Regen, Schnee, Eis und anderen Witterungseinflüssen geschützt.

Weitere Vorteile des erfindungsgemäßen Hubdachsystems liegen darin, dass dieses sehr stabil ist und insbesondere stabiler ist als Hubdachsysteme mit Scherenmechanismus. Darüber hinaus ist das erfindungsgemäße Hubdachsystem sehr schnell, z.B. auf Knopfdruck, aus- und einfahrbar, was sogar auch das Aus- bzw. Einfahren der Vorder- und der Rückwand miteinschließt, sodass lediglich die zwei Seitenwände noch manuell umgeklappt werden müssen, um die Kabine zu errichten.

Vorzugsweise weist das erfindungsgemäße Hubdachsystem in jeder Ausführungsform Befestigungselemente zur Befestigung an einem Fahrzeug auf, die insbesondere an der Unterkonstruktion angeordnet sind.

### Genaue Beschreibung der Erfindung

Die Erfindung wird nun genauer anhand von Ausführungsbeispielen und mit Bezug auf die Figuren beschrieben, die schematisch
- in der Figur 1 eine schematische Ansicht einer Anordnung von Bauteilen des erfindungsgemäßen Hubdachsystems zeigt,
- in der Figur 2 eine Ausführungsform eines erfindungsgemäßen Hubdachsystems im eingefahrenen Zustand zeigt,
- in der Figur 3 eine Ausführungsform eines erfindungsgemäßen Hubdachsystems im halb ausgefahrenen Zustand zeigt,
- in der Figur 4 eine Ausführungsform eines erfindungsgemäßen Hubdachsystems im ausgefahrenen Zustand zeigt, und
- in der Figur 5 eine weitere Ausführungsform eines erfindungsgemäßen Hubdachsystems zeigt.

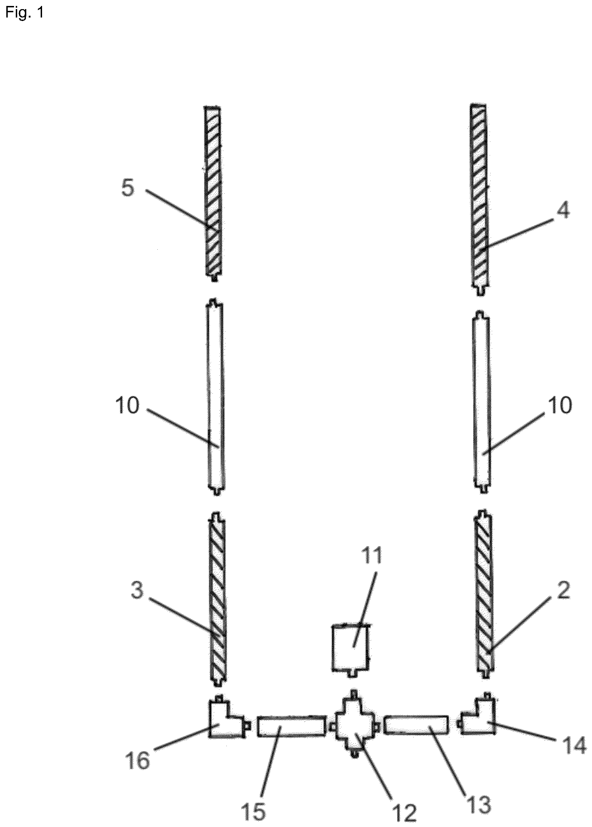

Die Figur 1 zeigt eine schematische Ansicht einer Anordnung von Bauteilen gemäß einer Ausführungsform des erfindungsgemäßen Hubdachsystems, in der die Bauteile jedoch zur besseren Veranschaulichung nicht miteinander verbunden sind. In der gezeigten Ausführungsform treibt ein Elektromotor **11** eine Antriebseinrichtung **1** an, die aus einem Kreuzgetriebe **12,** einer ersten Welle **13** und einem ersten Winkelgetriebe **14,** sowie einer zweiten Welle **15** und einem zweiten Winkelgetriebe **16** besteht. Die durch die Antriebseinrichtung **1** übertragene Kraft wird auf die erste Gewindestange **2** und die parallel zu dieser angeordnete zweite Gewindestange **3** übertragen. In dieser Ausführungsform haben die erste Gewindestange **2** und die zweite Gewindestange **3** ein gleichgerichtetes Gewinde, z.B. beide ein Rechtsgewinde oder beide ein Linksgewinde. An ihren jeweiligen den Winkelgetrieben **14, 16** abgewandten Enden sind die erste Gewindestange **2** und die zweite Gewindestange **3** jeweils mit einem Rundprofil **10** verbunden, wobei das Rundprofil **10,** das mit der ersten Gewindestange **2** verbunden ist, an seinem der Gewindestange **2** gegenüberliegenden Ende mit einer Gewindestange **4** verbunden ist, und wobei das Rundprofil **10,** das mit der zweiten Gewindestange **3** verbunden ist, an seinem der Gewindestange **3** gegenüberliegenden Ende mit einer Gewindestange **5** verbunden ist. Die erste Gewindestange **2** und die dritte Gewindestange **4** haben erfindungsgemäß ein gegenläufiges Gewinde, ebenso wie die zweite Gewindestange **3** und die vierte Gewindestange **5.** Gleitmodule **6,** die auf jeder der Gewindestangen **2, 3, 4, 5** verschieblich angeordnet sind, sind in der Fig. 1 nicht gezeigt.

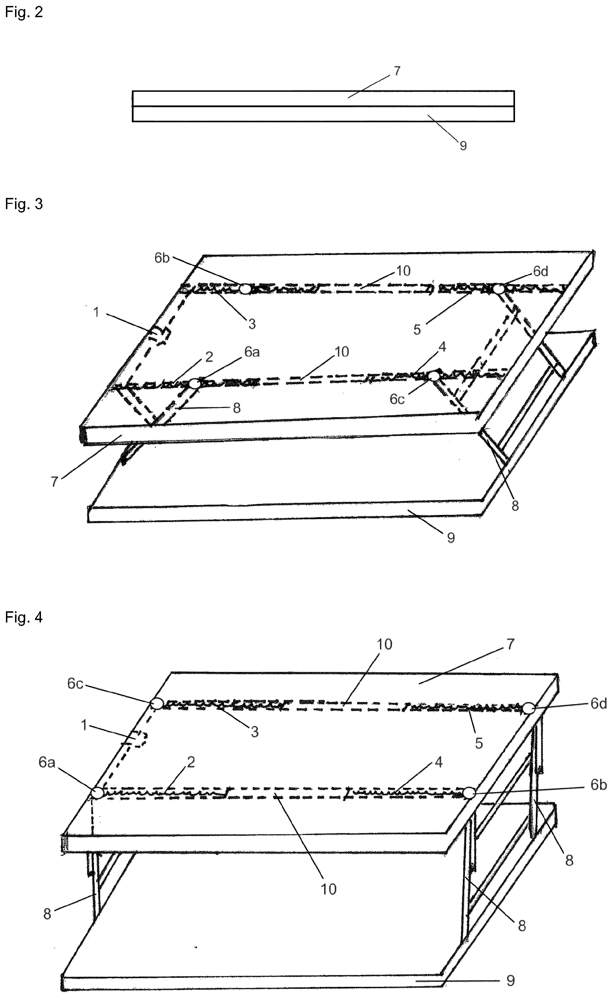

Die Figur 2 zeigt eine Ausführungsform eines erfindungsgemäßen Hubdachsystems im eingefahrenen Zustand. Dabei liegt die Rahmenkonstruktion **7** auf der Unterkonstruktion **9** auf, sodass alle Bauteile, die in die Rahmenkonstruktion **7** integriert sind, insbesondere die Gewindestangen **2, 3, 4, 5** mit den darauf angeordneten Gleitmodulen **6,** nicht von außen zugänglich sind.

Die Figur 3 zeigt eine Ausführungsform des erfindungsgemäßen Hubdachsystems im halb ausgefahrenen Zustand. Wie zu erkennen ist, ist auf jeder der Gewindestangen **2, 3, 4, 5** jeweils ein Gleitmodul **6a, 6b, 6c, 6d** angeordnet. Verbindungselemente **8** verbinden jeweils die Rahmenkonstruktion **7** mit der Unterkonstruktion **9.** Da die erste Gewindestange **2** und die dritte Gewindestange **4** ebenso wie die zweite Gewindestange **3** und die vierte Gewindestange **5** ein gegenläufiges Gewinde aufweisen, sich jedoch aufgrund ihrer Verbindung miteinander beim Drehen um ihre Längsmittelachse in die gleiche Richtung drehen, verschieben sich die Gleitmodule **6a** und **6c** bzw. **6b** und **6d,** die auf diesen Gewindestangen angeordnet sind, synchron in entgegengesetzte Richtungen, d.h. beim Rotieren der Gewindestangen **2, 3, 4, 5** in eine erste Richtung um ihre Längsmittelachsen bewegen sich die auf den Gewindestangen verschieblich angeordneten Gleitmodule **6a** und **6c** bzw. **6b** und **6d** synchron aufeinander zu, während sie sich beim Rotieren der Gewindestangen in eine entgegengesetzte zweite Richtung um ihre Längsmittelachsen synchron voneinander weg bewegen.

Die Figur 4 zeigt die gleiche Ausführungsform des erfindungsgemäßen Hubdachsystems wie in Figur 3, jedoch im ausgefahrenen Zustand. In diesem befinden sich die Gleitmodule **6a, 6b, 6c** und **6d** jeweils an den Enden der Gewindestangen **2, 3, 4** und **5** und die Verbindungselemente **8** sind rechtwinklig sowohl zu der Rahmenkonstruktion **7** als auch zu der Unterkonstruktion **9** angeordnet.

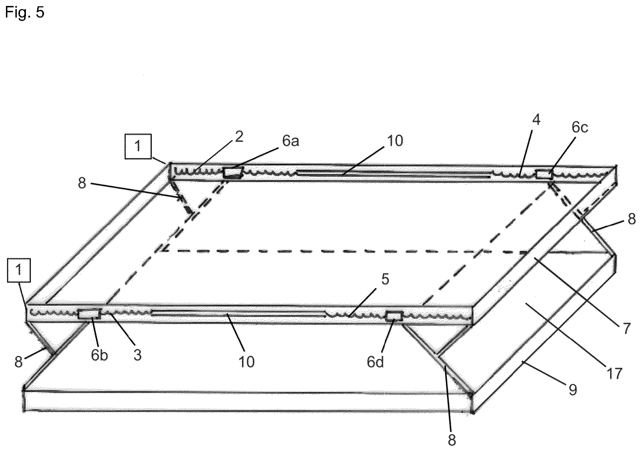

Die Figur 5 zeigt eine weitere Ausführungsform des erfindungsgemäßen Hubdachsystems, in der das Hubdachsystem zwei Antriebseinrichtungen **1** aufweist, von denen eine eingerichtet ist, die erste Gewindestange **2** (sowie das mit dieser verbundene Rundprofil **10** und die mit diesem verbundene dritte Gewindestange **4**) zu rotieren, und von denen die andere eingerichtet ist, die zweite Gewindestange **3** (sowie das mit dieser verbundene Rundprofil **10** und die mit diesem verbundene vierte Gewindestange **5**) zu rotieren. Beide Antriebseinrichungen **1** sind dabei eingerichtet, die von ihnen angetriebenen Gewindestangen völlig synchron um deren Längsmittelachsen zu rotieren. In der gezeigten Ausführungsform werden ein erstes Wandelement **17** und ein gegenüberliegendes zweites Wandelement **18,** die jeweils über eine Längsseite mit der Unterkonstruktion **9** verbunden sind, beim Ausfahren des Hubdachsystems, d.h. beim Verrutschen der Gleitmodule **6a, 6b, 6c, 6d** in Richtung der nach außen weisenden Enden der Gewindestangen, aufgerichtet. Ein drittes und ein viertes Wandelement (nicht gezeigt) könnten mit jeweils einer ihrer Längsseiten an der Unterkonstruktion **9** angeordnet sein und durch eine Klappbewegung um 90° mit ihrer gegenüberliegenden Längsseite in Richtung der Rahmenkonstruktion **7** bewegt werden, sodass die vier Wandelemente **17, 18, 19, 20** zusammen mit der Unterkonstruktion **9** und der Rahmenkonstruktion **7** eine Kabine begrenzen.

Die in der vorstehenden Beschreibung, in den Ansprüchen und in den Figuren offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste:

- 1: Antriebseinrichtung
- 2: Erste Gewindestange
- 3: Zweite Gewindestange
- 4: Dritte Gewindestange
- 5: Vierte Gewindestange
- 6, 6a, 6b, 6c, 6d: Gleitmodul
- 7: Rahmenkonstruktion
- 8: Verbindungselement
- 9: Unterkonstruktion
- 10: Rundprofil
- 11: Elektromotor
- 12: Kreuzgetriebe
- 13: erste Welle
- 14: erstes Winkelgetriebe
- 15: zweite Welle
- 16: zweites Winkelgetriebe
- 17: erstes Wandelement
- 18: zweites Wandelement
- 19: drittes Wandelement
- 20: viertes Wandelement

## Patentansprüche

1. Hubdachsystem für Fahrzeuge, umfassend eine Antriebseinrichtung (1), die eingerichtet ist, eine erste Gewindestange (2) und eine parallel zu dieser angeordnete zweite Gewindestange (3) um ihre Längsachsen rotieren zu lassen, wobei die erste Gewindestange (2) direkt oder über ein Zwischenelement (10) mit einer dritten Gewindestange (4) verbunden ist, die ein zu der ersten Gewindestange (2) gegenläufiges Gewinde aufweist, und wobei die zweite Gewindestange (3) direkt oder über ein Zwischenelement (10) mit einer vierten Gewindestange (5) verbunden ist, die ein zu der zweiten Gewindestange (3) gegenläufiges Gewinde aufweist,
wobei auf jeder der Gewindestangen (2, 3, 4, 5) jeweils ein Gleitmodul (6) verschieblich angeordnet ist, wobei das auf der ersten Gewindestange (2) angeordnete erste Gleitmodul (6a) und das auf der dritten Gewindestange (4) angeordnete dritte Gleitmodul (6c) eingerichtet sind, sich beim Rotieren der Gewindestangen (2, 4) in eine erste Richtung aufeinander zu zu bewegen und sich beim Rotieren der Gewindestangen (2, 4) in entgegengesetzter Richtung voneinander weg zu bewegen, und wobei das auf der zweiten Gewindestange (3) angeordnete zweite Gleitmodul (6b) und das auf der vierten Gewindestange (5) angeordnete vierte Gleitmodul (6d) eingerichtet sind, sich beim Rotieren der Gewindestangen (3, 5) in eine erste Richtung aufeinander zu zu bewegen und sich beim Rotieren der Gewindestangen (3, 5) in entgegengesetzter Richtung voneinander weg zu bewegen, wobei die Gewindestangen (2, 3, 4, 5) und die auf diesen angeordneten Gleitmodule (6a, 6b, 6c, 6d) Bestandteile einer Rahmenkonstruktion (7) sind, die über an den Gleitmodulen (6a, 6b, 6c, 6d) angeordnete Verbindungselemente (8) mit einer Unterkonstruktion (9) verbunden ist, wobei die Rahmenkonstruktion (7) eingerichtet ist, sich beim Rotieren der Gewindestangen (2, 3, 4, 5) in eine erste Richtung in Richtung der Unterkonstruktion (9) zu bewegen und sich beim Rotieren der Gewindestangen (2, 3, 4, 5) in eine entgegengesetzte Richtung von der Unterkonstruktion (9) weg zu bewegen.

2. Hubdachsystem für Fahrzeuge nach Anspruch 1, **dadurch gekennzeichnet, dass** die an den Gleitmodulen (6) angeordneten Verbindungselemente (8) eingerichtet sind, stufenlos in einem beliebigen Winkel zwischen 0° und 90° zu der Unterkonstruktion (9) angeordnet zu werden.

3. Hubdachsystem für Fahrzeuge nach einem der Ansprüche 1 oder 2, **dadurch gekennzeichnet, dass** die erste Gewindestange (2) mit der dritten Gewindestange (4) und die zweite Gewindestange (3) mit der vierten Gewindestange (5) jeweils über Rundprofile (10) miteinander verbunden sind.

4. Hubdachsystem für Fahrzeuge nach einem der voranstehenden Ansprüche, **dadurch gekennzeichnet, dass** die Antriebseinrichtung (1) eine von einem Elektromotor (11) oder mechanisch angetriebene Antriebseinrichtung ist, die ein Kreuzgetriebe (12) aufweist, das eingerichtet ist, eine Kraft mittels einer ersten Welle (13) und einem ersten Winkelgetriebe (14) auf die erste Gewindestange (2) sowie mittels einer zweiten Welle (15) und einem zweiten Winkelgetriebe (16) auf die zweite Gewindestange (3) zu übertragen.

5. Hubdachsystem für Fahrzeuge nach einem der voranstehenden Ansprüche, **dadurch gekennzeichnet, dass** die Gewindestangen (2, 3, 4, 5) jeweils eine Länge zwischen 50 und 100 cm aufweisen.

6. Hubdachsystem für Fahrzeuge nach einem der voranstehenden Ansprüche, **gekennzeichnet durch** ein erstes Wandelement (17) und ein gegenüberliegendes zweites Wandelement (18), die jeweils mit einer Längsseite an der Unterkonstruktion (9) angeordnet sind, wobei das erste Wandelement (17) mit seiner gegenüberliegenden Längsseite an dem auf der dritten Gewindestange (4) verschieblich angeordneten dritten Gleitmodul (6c) und dem auf der vierten Gewindestange (5) verschieblich angeordneten vierten Gleitmodul (6d) befestigt ist und wobei das zweite Wandelement (18) mit seiner gegenüberliegenden Längsseite an dem auf der ersten Gewindestange (2) verschieblich angeordneten ersten Gleitmodul (6a) und dem auf der zweiten Gewindestange (3) verschieblich angeordneten zweiten Gleitmodul (6b) befestigt ist.

7. Hubdachsystem für Fahrzeuge nach Anspruch 6, **gekennzeichnet durch** ein drittes Wandelement (19) und ein gegenüberliegendes viertes Wandelement (20), die jeweils unabhängig voneinander mit einer Längsseite an der Unterkonstruktion (9) oder an der Rahmenkonstruktion (7) angeordnet sind, wobei sie, für den Fall, dass sie mit einer Längsseite an der Unterkonstruktion (9) angeordnet sind, in einem Zustand, in dem die Unterkonstruktion (9) und die Rahmenkonstruktion (7) jeweils in einem 90°-Winkel zu dem ersten Wandelement (17) und dem zweiten Wandelement (18) angeordnet sind, mit der gegenüberliegenden Längsseite an der Rahmenkonstruktion (7) anliegen, und für den Fall, dass sie mit einer Längsseite an der Rahmenkonstruktion (7) angeordnet sind, in einem Zustand, in dem die Unterkonstruktion (9) und die Rahmenkonstruktion (7) jeweils in einem 90°-Winkel zu dem ersten Wandelement (17) und dem zweiten Wandelement (18) angeordnet sind, mit der gegenüberliegenden Längsseite an der Unterkonstruktion (9) anliegen, wodurch die Rahmenkonstruktion (7), die Unterkonstruktion (9) und die vier Wandelemente (17, 18, 19, 20) zwischen sich eine Kabine begrenzen.

8. Hubdachsystem für Fahrzeuge nach einem der Ansprüche 6 oder 7, **dadurch gekennzeichnet, dass** die vier Wandelemente (17, 18, 19, 20) jeweils aus einem faltbaren Material gefertigt sind.

9. Hubdachsystem für Fahrzeuge nach einem der Ansprüche 6 oder 7, **dadurch gekennzeichnet, dass** die vier Wandelemente (17, 18, 19, 20) jeweils aus einem festen Material gefertigt sind, wobei jedes der vier Wandelemente (17, 18, 19, 20) unabhängig von den anderen drei Wandelementen mit einer Längsseite entweder an der Unterkonstruktion (9) oder an der Rahmenkonstruktion (7) angeordnet ist.

10. Hubdachsystem für Fahrzeuge nach einem der Ansprüche 6 oder 7, **dadurch gekennzeichnet, dass** in einem Zustand, in dem die Rahmenkonstruktion (7), die Unterkonstruktion (9) und die vier Wandelemente (17, 18, 19, 20) zwischen sich eine Kabine begrenzen, sich keine Bestandteile des Hubdachsystems außerhalb der Kabine befinden.
